# EUROPÄISCHE PATENTSCHRIFT

(11) **EP 4 632 272 B1**
(45) Veröffentlichungstag und Bekanntmachung des Hinweises auf die Patenterteilung: **28.10.2026**
(21) Anmeldenummer: 25169705.8
(22) Anmeldetag: 10.04.2025
(51) Int. Cl.: F21V 8/00

(54) **LICHTLEITELEMENT FÜR ANZEIGETAFELN**
LIGHT GUIDE ELEMENT FOR DISPLAY PANELS
GUIDE DE LUMIÈRE POUR PANNEAUX D'AFFICHAGE

(30) Priorität: 12.04.2024 DE 102024110253
(43) Veröffentlichungstag der Anmeldung: 15.10.2025
(73) Patentinhaber: Bremicker Verkehrstechnik GmbH & Co. KG, 82362 Weilheim (DE)
(72) Erfinder: Dopfer, Herbert, 82320 Peißenberg (DE); Prof. Dr. Ziemann, Olaf, 90489 Nürnberg (DE); Bloos, Martin, 90471 Nürnberg (DE)
(74) Vertreter: Baldus, Oliver

(56) Entgegenhaltungen:
- DE-A1- 10 062 103
- DE-A1- 102012 112 125
- DE-A1- 102015 218 158

## Beschreibung

Die vorliegende Erfindung betrifft eine Anzeigetafel mit einem ein Lichtleitelement für Anzeigetafeln und ein Verfahren zum Aussenden von Licht mittels eines Lichtleitelements.

Die Druckschrift DE 100 62 103 A1 offenbart einen Scheinwerfer mit einer einem hinteren Endstück eines Lichtleiters vorgelagerten Lichtquelle und einem einem vorderen Endstück des Lichtleiters vorgelagerten Auskopplungselement das als ein im Wesentlichen planparalleles kartesisches Oval ausgebildet ist.

EP 2 643 717 A1 offenbart eine farb- und lichtmischende Sammeloptik für Anzeigetafeln mit einer LED-Lichtquelle, einem Lichtleiterstab und einer nachgeschalteten Linse.

Es ist die technische Aufgabe der vorliegenden Erfindung, die Wahrnehmbarkeit von Anzeigetafeln zu verbessern.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch eine Anzeigetafel mit einem Lichtleitelement für Anzeigetafeln gelöst, das einen Lichtleiterstab zum Einleiten von Licht einer Lichtquelle; und eine Freiformlinse zum Aussenden des Lichts aus dem Lichtleiterstab als divergierendes Strahlenbündel umfasst. Der Divergenzwinkel des Strahlenbündels liegt beispielsweise zwischen 1° und 5°, zwischen 1° und 10°, zwischen 2° und 5° oder zwischen 2° und 10°. In vorgegebenen Winkelbereichen kann die Freiformlinse jedoch auch zusätzlich ein paralleles Strahlenbündel aussenden. Durch das Lichtleitelement wird der technische Vorteil erreicht, dass die Anzeigetafel in einem größeren Bereich wahrgenommen werden kann.

In einer technisch vorteilhaften Ausführungsform der Anzeigetafel verändert sich der Querschnitt und/oder die Querschnittsfläche des Lichtleiterstabs über die Länge des Lichtleiterstabs kontinuierlich. Dadurch wird beispielsweise der technische Vorteil erreicht, dass die Ausbreitungsrichtung des Lichts entlang der Hauptachse innerhalb des Lichtleiterstabes verändert werden kann.

In einer weiteren technisch vorteilhaften Ausführungsform der Anzeigetafel sind der Lichtleiterstab und die Freiformlinse einstückig ausgebildet. Dadurch wird beispielsweise der technische Vorteil erreicht, dass das Lichtleitelement auf einfache Weise eingebaut werden kann.

In einer weiteren technisch vorteilhaften Ausführungsform der Anzeigetafel weist der Lichtleiterstab eine Länge auf, die mindestens ein Vielfaches der Länge oder Breite der Lichteintrittsfläche ist. Beispielsweise ist die Länge des Lichtleiterstab mindestens ein Dreifaches der Länge oder Breite der Lichteintrittsfläche. Dadurch wird beispielsweise der technische Vorteil erreicht, dass eine gute Mischung des Lichtes erreicht wird.

In einer weiteren technisch vorteilhaften Ausführungsform der Anzeigetafel weicht die Form der Freiformlinse von der Form einer optischen Sammellinse ab. Dadurch wird beispielsweise der technische Vorteil erreicht, dass das divergierende Strahlenbündel effizient erzeugt werden kann.

In einer weiteren technisch vorteilhaften Ausführungsform der Anzeigetafel ist die Form der Freiformlinse derart ausgebildet ist, dass diese in einem ersten Winkelbereich ein kollimiertes und in einem zweiten Winkelbereich ein divergentes Strahlenbündel erzeugt. Die Form der Freiformlinse ist nichtrotationssymmetrisch und/oder weist eine kontinuierliche Oberfläche auf. Dadurch wird beispielsweise der technische Vorteil erreicht, dass Teile des Strahlenbündels kollimiert werden, während weitere divergent abgestrahlt werden.

In einer weiteren technisch vorteilhaften Ausführungsform der Anzeigetafel weist der Lichtleiterstab eine im Umfang kantenfreie Seitenfläche auf. Dadurch wird beispielsweise ebenfalls der technische Vorteil erreicht, dass eine gute Mischung des Lichtes erreicht wird.

In einer weiteren technisch vorteilhaften Ausführungsform der Anzeigetafel ist eine Lichteintrittsfläche des Lichtleiterstabes mit einer vertikalen Strukturierung oder einer Strichpolitur versehen ist. Dadurch wird beispielsweise ebenfalls der technische Vorteil erreicht, dass das eintretende Licht in horizontaler Richtung zerstreut wird, um damit eine Homogenisierung der Lichtverteilung zu erreichen.

In einer weiteren technisch vorteilhaften Ausführungsform der Anzeigetafel ist das Lichtleitelement in eine Platte integriert. Dadurch wird beispielsweise ebenfalls der technische Vorteil erreicht, dass die Montage des Lichtleitelements verbessert werden kann.

In einer weiteren technisch vorteilhaften Ausführungsform des Lichtleitelements sind die Achse des Lichtleiterstabes und die Achse der Freiformlinse parallel gegeneinander versetzt. Dadurch wird beispielsweise ebenfalls der technische Vorteil erreicht, dass das Strahlenbündel in eine vorgegebene Richtung jenseits der Achse der Freiformlinse abgelenkt werden kann.

In einer weiteren technisch vorteilhaften Ausführungsform der Anzeigetafel ist das Lichtleitelement aus einem transparenten Kunststoff gebildet. Dadurch wird beispielsweise ebenfalls der technische Vorteil erreicht, dass sich das Lichtleitelement auf einfache Weise herstellen lässt.

In einer weiteren technisch vorteilhaften Ausführungsform der Anzeigetafel umfasst die Anzeigetafel eine Platte mit einer matrixförmigen Anordnung von Lichtleitelementen, die einen Lichtleiterstab zum Einleiten von Licht einer Lichtquelle; und eine Freiformlinse zum Aussenden des Lichts aus dem Lichtleiterstab als divergierendes Strahlenbündel umfassen. Dadurch werden die gleichen technischen Vorteile wie durch das Lichtleitelement nach dem ersten Aspekt erreicht.

In einer weiteren technisch vorteilhaften Ausführungsform der Anzeigetafel ist das Lichtleitelement in der Anzeigetafel derart angeordnet, dass das divergierende Strahlenbündel gegenüber der Achse der Freiformlinse nach unten gelenkt wird. Dadurch wird beispielsweise ebenfalls der technische Vorteil erreicht, dass das Licht effizient nur in den vorgegebenen Winkelbereich gelenkt wird, in den dies gewünscht ist.

Gemäß einem zweiten Aspekt wird die technische Aufgabe durch ein Verfahren zum Aussenden von Licht mittels eines Lichtleitelements für eine Anzeigetafel gelöst, mit den Schritten eines Einleitens von Licht einer Lichtquelle in einen Lichtleiterstab; und eines Aussendens des Lichts aus dem Lichtleiterstab durch eine Freiformlinse als divergierendes Strahlenbündel. Dadurch werden die gleichen technischen Vorteile wie durch das Lichtleitelement nach dem ersten Aspekt erreicht.

Ausführungsbeispiele der Erfindung sind in den Zeichnungen dargestellt und werden im Folgenden näher beschrieben.

Es zeigen:
- Fig. 1: eine Ansicht eines Lichtleitelements für eine Anzeigetafel;
- Fig. 2: eine weitere Ansicht eines Lichtleitelements für eine Anzeigetafel;
- Fig. 3: eine Aufsicht auf das Lichtleitelement für eine Anzeigetafel;
- Fig. 4: eine Ansicht einer Lichteintrittsfläche des Lichtleiterstabes;
- Fig. 5: eine Ansicht eines weiteren Lichtleitelements für eine Anzeigetafel;
- Fig. 6: eine weitere Ansicht des weiteren Lichtleitelements für eine Anzeigetafel;
- Fig. 7: eine Ansicht einer Lichtverteilung des weiteren Lichtleitelements;
- Fig. 8: eine Ansicht von Lichtleiterelementen, die in einer Platte integriert sind;
- Fig. 9: eine weitere Ansicht von Lichtleiterelementen, die in einer Platte integriert sind;
- Fig. 10: eine Ansicht eines Strahlengangs in dem Lichtleiterelement mit einer Lichtfalle;
- Fig. 11: eine Ansicht eines Strahlengangs in dem Lichtleiterelement mit der Lichtfalle; und
- Fig. 12: ein Blockdiagramm eines Verfahrens zum Aussenden von Licht mittels eines Lichtleitelements für eine Anzeigetafel.

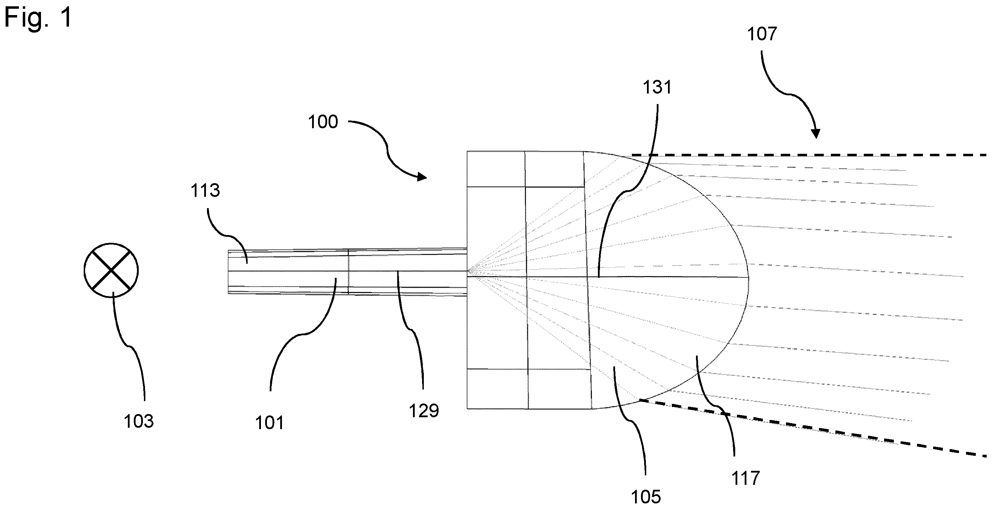

Fig. 1 zeigt ein Lichtleitelement 100 für Anzeigetafeln, beispielsweise für den Straßenverkehr. Das Lichtleitelement 100 umfasst einen Lichtleiterstab 101 zum Einleiten von Licht einer Lichtquelle 103 und eine Freiformlinse 105 zum Aussenden des Lichts aus dem Lichtleiterstab 101 als divergierendes Strahlenbündel 107. Das divergierende Strahlenbündel 107 umfasst eine Anzahl von Lichtstrahlen, die leicht auseinanderlaufen, aber trotzdem zusammen in die gleiche Richtung gerichtet sind. Der Divergenzwinkel des Strahlenbündels 107 ist beispielsweise größer als 1°, größer als 2°, größer als 3°, größer als 4°, oder größer als 5°. Der Divergenzwinkel des Strahlenbündels 107 ist beispielsweise kleiner als 5°, kleiner als 10°, kleiner als 20°, oder kleiner als 30°. In Teilbereichen kann das Licht des Strahlenbündels 107 auch parallel oder kollimiert sein. Das Lichtleitelement 100 ist beispielsweise aus Polycarbonat oder einem anderen geeigneten transparenten Werkstoff gebildet.

Die Lichtquelle 103 umfasst beispielsweise eine LED-Lichtquelle 103 die mehrere LED-Elemente für die Farben Rot, Grün und Blau umfasst, wie beispielsweise eine FullColor- oder Multi-LED. Eine Lichteintrittsfläche 111 des Lichtleitelements 100 ist vor der Lichtquelle 103 angeordnet und fängt Licht der Lichtquelle 103 ein. Das emittierte Licht der Lichtquelle 103 wird in den Lichtleiterstab 101 eingeleitet.

Der Lichtleiterstab 101 erstreckt sich senkrecht zur Lichteintrittsfläche 111. Ein Querschnitt des Lichtleiterstabs 101 ist konstant oder verändert sich entlang der Länge allmählich. Beispielsweise wird der Querschnitt des Lichtleiterstabs 101 im Verlauf von der Lichtquelle 103 zur Freiformlinse 105 hin größer. Dadurch kann der Winkel des Lichtes im Lauf des Lichtleiterstabs 101 abgeflacht werden.

Die Seitenflächen 113 des Lichtleiterstabes 101 sind aus optisch spiegelnden oder polierten Flächen gebildet, die das auftreffende Licht in das Innere des Lichtleiterstabs 101 mittels Totalreflexion zurückreflektieren. Die Seitenflächen 113 grenzen nicht scharfkantig und in abgerundeter Weise aneinander und können in sich verwunden sein. Die Seitenflächen 113 gehen ineinander über, ohne hierbei Kanten zu bilden. Der Krümmungsradius zwischen zwei aneinandergrenzenden Seitenflächen 113 liegt beispielsweise zwischen 0.1 mm und 0.5 mm, vorzugsweise zwischen 0.2 mm und 0.4 mm.

Das Material des Lichtleiterstabes 101 ist transparent und frei von lichtstreuenden Komponenten. Die Länge des Lichtleiterstabs 101 beträgt beispielsweise 10 mm, die Breite der Lichteintrittsfläche des Lichtleiterstabs 101 beträgt beispielsweise 3.2 mm und deren Höhe beispielsweise 1.8 mm.

Die Freiformlinse 105 umfasst einen konvexen Abschnitt 117. Die Achse 129 des Lichtleiterstabes 101 und die Achse 131 der Freiformlinse 105 sind parallel gegeneinander versetzt, so dass das Strahlenbündel 107 aus der zentralen Achse 131 der freiformlinse 105 abgelenkt werden kann. Der Fokus der Freiformlinse 105 befindet sich beispielsweise 0,1 mm unterhalb der Achse des Lichtleiterstabs 101. Die Freiformlinse 105 weist eine komplexe nichtrotationssymmetrische Oberfläche auf. Die Form der Freiformlinse 105 weicht von einer Rotationssymmetrie ab.

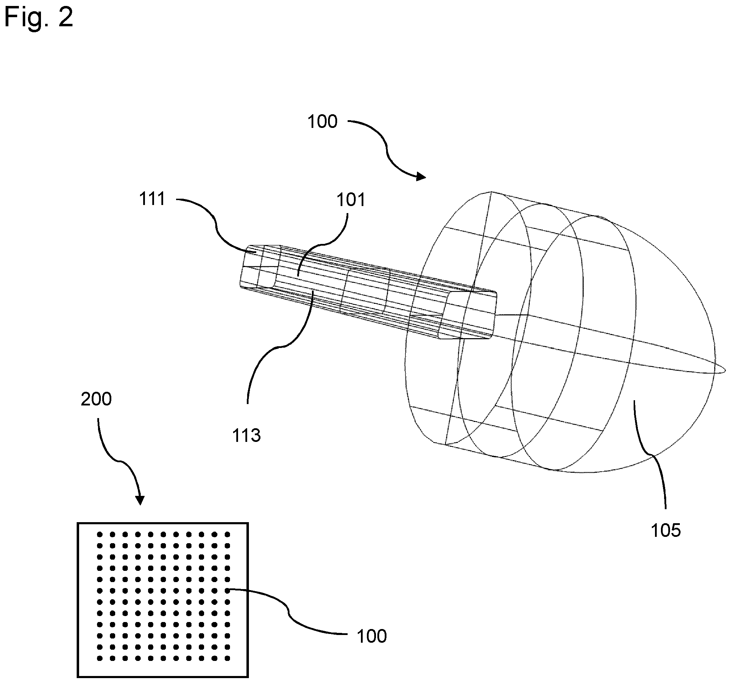

Fig. 2 zeigt eine weitere Ansicht des Lichtleitelements 100 für eine Anzeigetafel 200. Die Anzeigetafel 200 ist beispielsweise eine Anzeigetafel 200 für den Straßenverkehr und umfasst eine Vielzahl der Lichtleitelemente 100 in Matrixanordnung, die sich jeweils vor entsprechend angeordneten Lichtquellen 103 befinden. Die Lichtleitelemente 100 der Anzeigetafel 200 senden das Licht gegenüber einer horizontalen Richtung nach unten gerichtet aus.

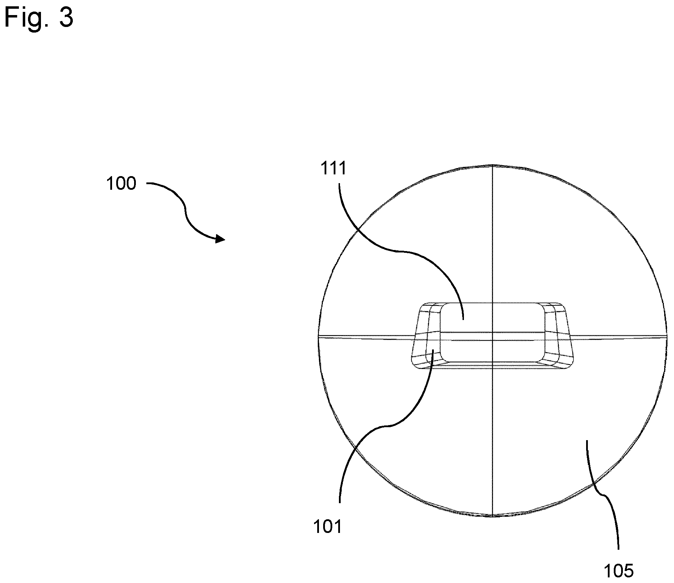

Fig. 3 zeigt eine Aufsicht auf das Lichtleitelement 100 für eine Anzeigetafel 200. Der Querschnitt des Lichtleiterstabes 101 entspricht in seinem Umriss weitgehend dem punktgespiegelten Umriss der benötigten Lichtverteilung. Im gezeigten Fall ist der Querschnitt des Lichtleiterstabes 101 im Wesentlichen trapezförmig. Das durchtretende Licht durch den Lichtleiterstab 101 wird durch die nachgeschaltete Freiformlinse 105 nach dem optischen Brechungsgesetz in gespiegelter Form abgestrahlt, so dass durch die Ausgestaltung der Freiformlinse 105 zusätzlich Einfluss auf das abgestrahlte Erscheinungsbild genommen werden kann.

Die Freiformlinse 105 bündelt das im Mittelpunkt des Lichteiterstabs 101 verlaufende Licht nicht achsparallel, sondern erzeugt ein in Teilen divergierendes Strahlenbündel 107. Der Divergenzwinkel gibt den Öffnungswinkel des Strahlenbündels an. Der Divergenzwinkel beträgt beispielsweise zwischen 1° und 5° mit kontinuierlichem Übergang. Licht, das seitlich des Mittelpunktes verläuft, wird in einer zugehörigen Richtung teilweise parallel, aber nicht achsparallel zum Lichtleitstab gebündelt.

Der Lichtleiterstab 101 und die Freiformlinse 105 sind einstückig aus dem gleichen Material gebildet, so dass zwischen diesen keine Lichteintritts- oder -austrittsfläche liegt.

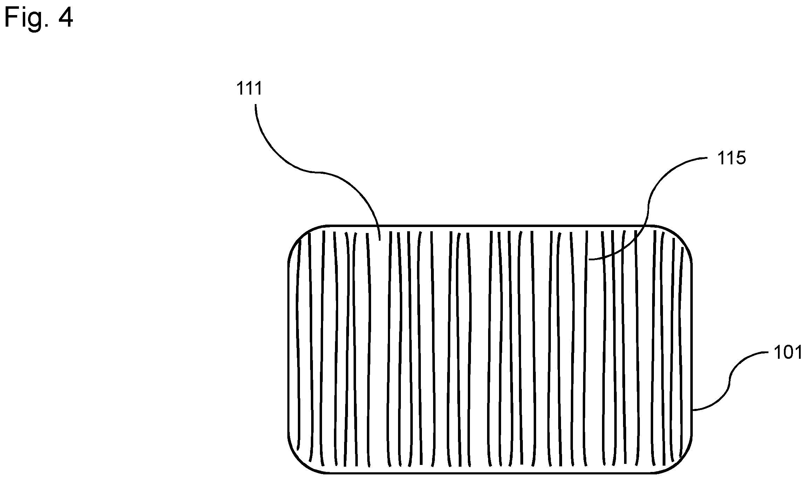

Fig. 4 zeigt eine Lichteintrittsfläche 111 der Lichtleiterstabes 101. Die Lichteintrittsfläche 111 weist vertikale Strukturen oder eine vertikale Strichpolitur 115 auf, um das eintretende Licht in horizontaler Richtung zu zerstreuen um damit eine bessere Homogenisierung zu erzielen. Durch die Strichpolitur wird die Oberfläche der Lichteintristsfläche 111 in vertikaler Richtung aufgeraut, um das eintretende Licht zu zerstreuen.

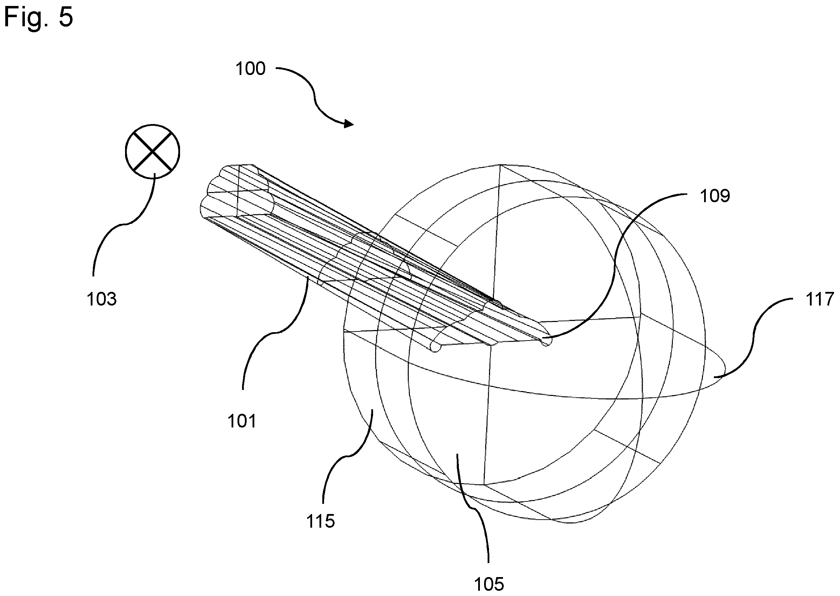

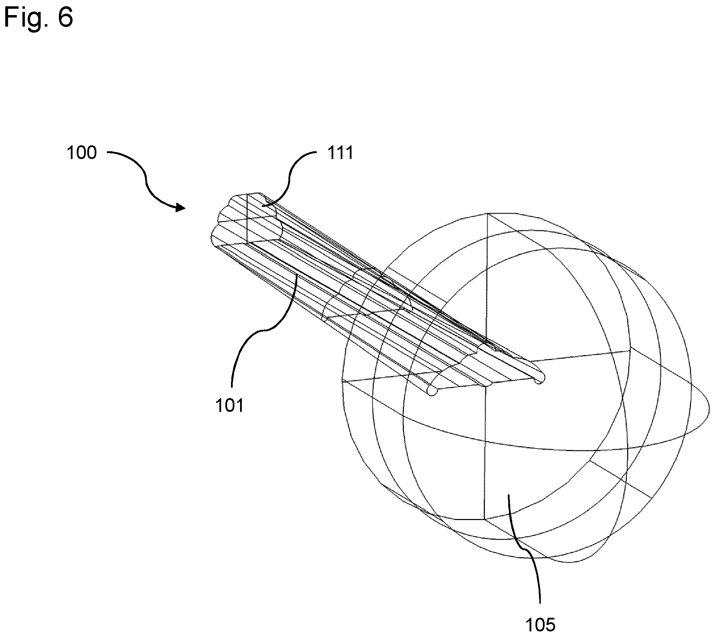

Fig. 5 und 6 zeigen Ansichten eines weiteren Lichtleitelements 100 für die Anzeigetafel 200. Der Lichtleiterstab 101 weist eine im Querschnitt abgerundete Seitenfläche 113 auf. Die Seitenflächen 113 gehen dadurch glatt ineinander über und weisen keinen scharfkantigen Übergang auf. Der Querschnitt des Lichtleiterstabes 101 verändert sich von der Lichtquelle 103 zur Freiformlinse 105 hin.

Insgesamt verringert sich die Querschnittsfläche im Verlauf des Lichtleiterstabes 101 zur Freiformlinse 105 hin. Dadurch kann der Winkel des Lichtes im Lauf des Lichtleiterstabs 101 steiler gemacht werden. Die Querschnittsfläche im Bereich der freiformlinse weist eine im wesentlichen dreickige Form auf. Zusätzlich umfasst die Querschnittsfläche zusätzliche konvexe oder bauchförmige Auswölbungen 109 an den Ecken der Dreiecksform, mit denen das Licht in den Eckbereichen verstärkt werden kann. Dadurch kann das ausgesendete Licht über den gesamten Bereich homogenisiert werden.

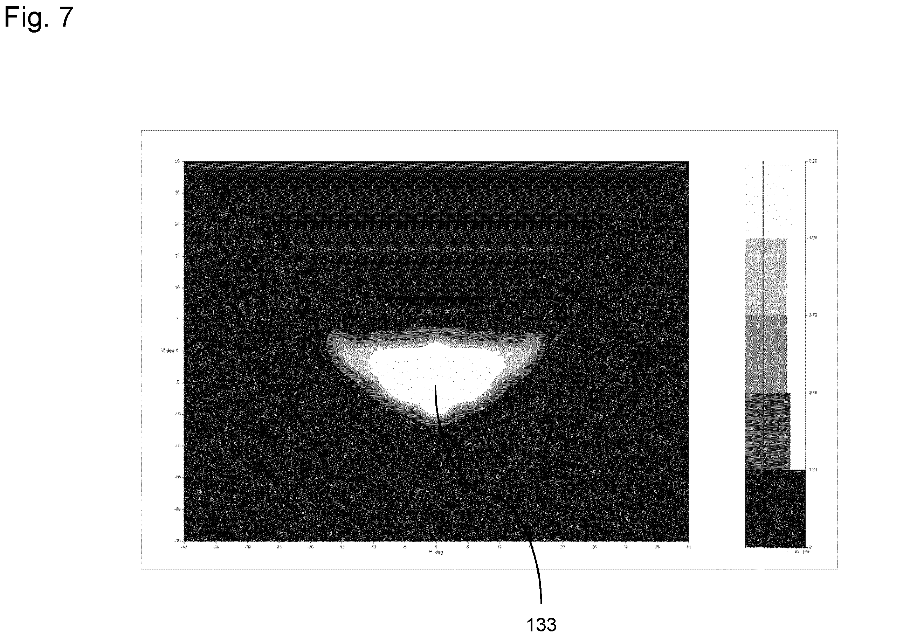

Fig. 7 eine Ansicht einer Lichtverteilung 133 des weiteren Lichtleitelements 100. Die Lichtverteilung 133 entspricht der gespiegelten Form der Querschnittsfläche des Lichtleiterstabes 101 im Übergang zur Freiformlinse 105 und ist weitgehend homogen.

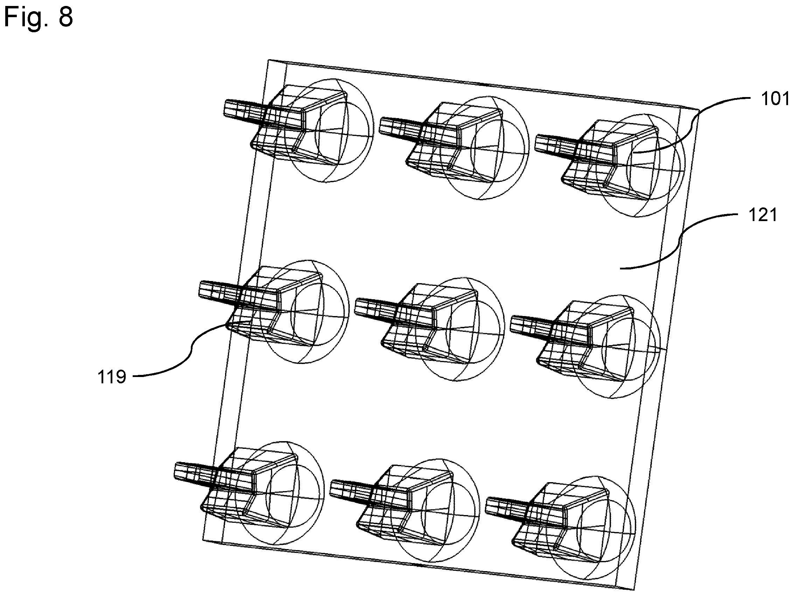

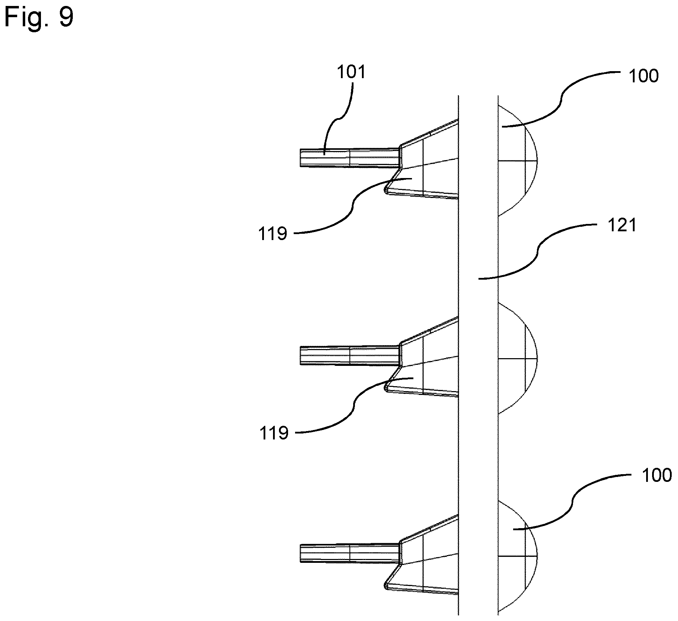

Fig. 8 und 9 zeigen Ansichten von Lichtleitelementen 100, die in einer transparenten Platte 121 integriert sind. Die Platte 121 umgibt einen seitlichen Teilbereich der Lichtleitelementen 100. Die Lichtleitelemente 100 sind matrixförmig in der Platte 121 angeordnet und einstückig zusammen mit der Platte 121 gebildet. Die matrixförmigen Lichtleitelemente 100 sind integraler Bestandteil der Platte 121 und zusammen aus dem gleichen Material gebildet.

Jedes der Lichtleitelemente 100 umfasst zudem eine Lichtfalle 119, mit der von außen einfallendes Licht ausgekoppelt werden kann. Durch die matrixförmige Anordnung der Lichtleitelemente 100 in der Platte 121 entfallen aufwändige Steckarbeiten beim Zusammensetzen der Anzeigetafel 200.

Die ebene Platte 121 weist beispielsweise eine Dicke zwischen 3 mm und 5 mm , bevorzugt 4 mm auf, und ist zwischen der Lichtfalle 119 und der Freiformlinse 105 angeordnet oder integriert. Die Platte 121 und das Lichtleitelemente 100 sind beispielsweise aus einem transparenten Kunststoff gebildet.

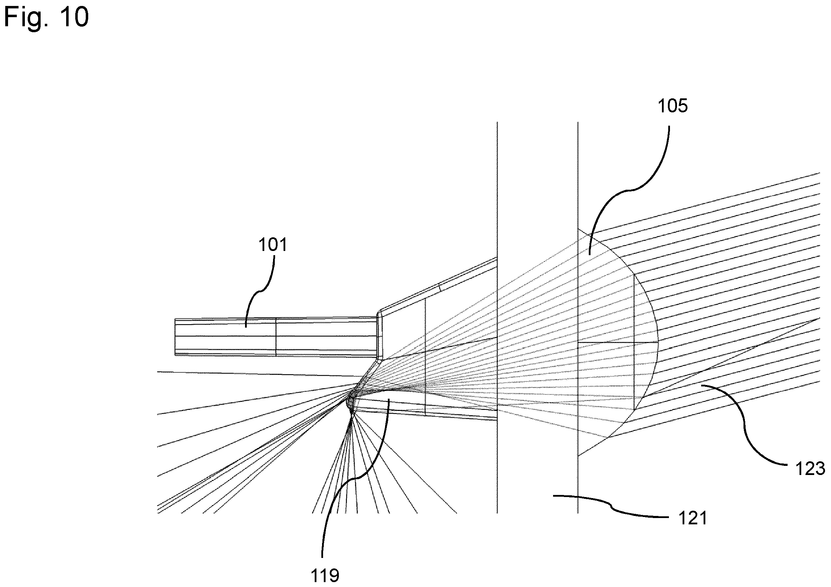

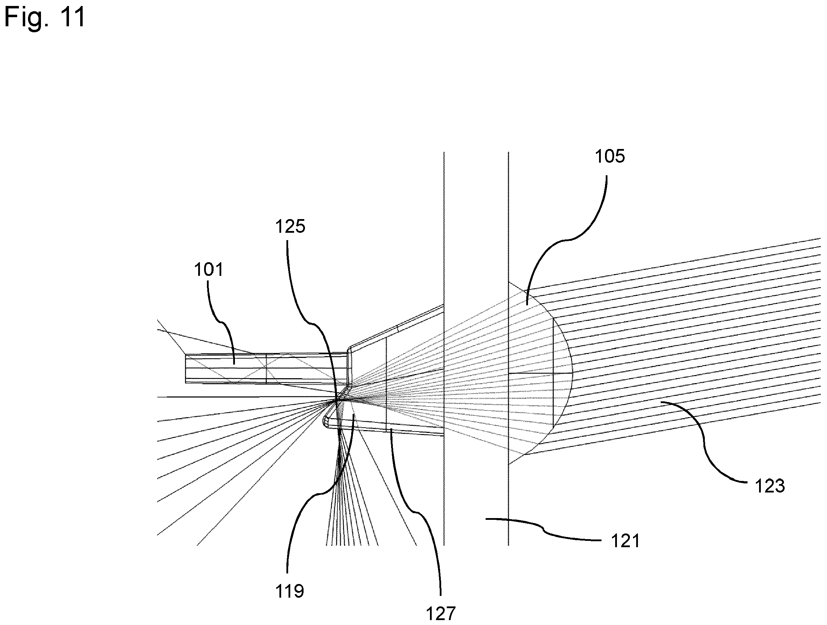

Fig. 10 und 11 zeigen Ansichten eines Strahlengangs in einem Lichtleiterelement 100 mit der Lichtfalle 119. Die Lichtfalle 119 koppelt von außen einfallendes Licht 123 aus dem Lichtleitelement 100 aus, wie beispielsweise Sonnenlicht einer tiefstehenden Sonne. Die Lichtfalle 119 ist durch einen im Querschnitt dreieckigen Abschnitt gebildet, der sich zwischen der Freiformlinse 105 und dem Lichtleiterstab 101 befindet. Die Lichtfalle 119 umfasst zwei Lichtaustrittsflächen 125 und 127, mit denen das einfallende Licht 123 aus dem Lichtleiter 100 ausgekoppelt wird. Die Lichtaustrittsflächen 125 und 127 sind in einem spitzen Winkel zueinander angeordnet. In Richtung der Freiformlinse 105 verbreitert sich die Lichtfalle 119.

Die Lichtfalle 119 dient der Vermeidung eines Brennflecks auf der Materialoberfläche und einer Zerstreuung des einfallenden Lichtes, um hohe Lichtkonzentrationen zu vermeiden. Zudem wird eine Verhinderung der Einkopplung in den Lichtleiterstab 101 von flachem Fremdlicht erreicht, beispielsweise um Phantomleuchten bei tiefstehender Sonne zu unterbinden. Der Kontrast wird in ausgeschaltetem Zustand erhöht.

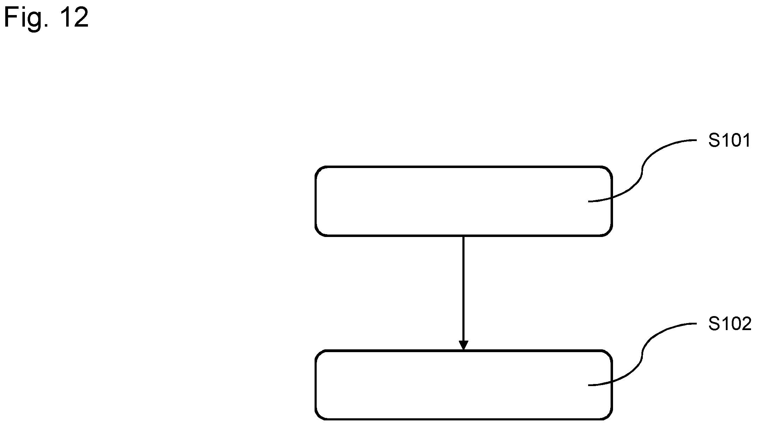

Fig. 12 zeigt ein Blockdiagramm eines Verfahrens zum Aussenden von Licht mittels eines Lichtleitelements 100 für eine Anzeigetafel 200. Die Anzeigetafel 200 dient beispielsweise zum wechselnden Anzeigen von Verkehrszeichen an Straßen oder Brücken.

Das Verfahren umfasst den Schritt S101 eines Einleitens von Licht der Lichtquelle 103 in den Lichtleiterstab 101. In Schritt S102 wird das Licht aus dem Lichtleiterstab 101 durch eine Freiformlinse 105 als divergierendes Strahlenbündel 107 ausgesendet.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Lichtleitelement
- 101: Lichtleiterstab
- 103: Lichtquelle
- 105: Freiformlinse
- 107: Strahlenbündel
- 109: Auswölbung
- 111: Lichteintrittsfläche
- 113: Seitenfläche
- 115: Strichpolitur
- 117: konvexer Abschnitt
- 119: Lichtfalle
- 121: Platte
- 123: einfallendes Licht
- 125: Lichtaustrittsfläche
- 127: Lichtaustrittsfläche
- 129: Achse
- 131: Achse
- 133: Lichtverteilung

- 200: Anzeigetafel

## Patentansprüche

1. Anzeigetafel (200) mit:
einem Lichtleitelement (100) für Anzeigetafeln, aufweisend:
- ein Lichtleiterstab (101) zum Einleiten von Licht einer Lichtquelle (103); und
- eine Linse zum Aussenden des Lichts aus dem Lichtleiterstab (101)
**dadurch gekennzeichnet, dass**
die Linse eine Freiformlinse (105) ist, die das Licht aus dem Lichtleiterstab als divergierendes Strahlenbündel (107) aussendet.

2. Anzeigetafel (200) nach Anspruch 1, wobei sich der Querschnitt und/oder die Querschnittsfläche des Lichtleiterstabs (101) über die Länge des Lichtleiterstabs (101) kontinuierlich verändert.

3. Anzeigetafel (200) nach einem der vorangehenden Ansprüche, wobei der Lichtleiterstab (101) und die Freiformlinse (105) einstückig ausgebildet sind.

4. Anzeigetafel (200) nach einem der vorangehenden Ansprüche, wobei der Lichtleiterstab (101) eine Länge aufweist, die mindestens ein Vielfaches der Länge oder Breite der Lichteintrittsfläche (111) ist.

5. Anzeigetafel (200) nach einem der vorangehenden Ansprüche, wobei die Form der Freiformlinse (105) von der Form einer optischen Sammellinse abweicht.

6. Anzeigetafel (200) nach einem der vorangehenden Ansprüche, wobei die Form der Freiformlinse (105) derart ausgebildet ist, dass diese in einem ersten Winkelbereich ein kollimiertes und in einem zweiten Winkelbereich das divergente Strahlenbündel (107) erzeugt.

7. Anzeigetafel (200) nach einem der vorangehenden Ansprüche, wobei der Lichtleiterstab (101) eine im Umfang kantenfreie Seitenfläche (113) aufweist.

8. Anzeigetafel (200) nach einem der vorangehenden Ansprüche, wobei eine Lichteintrittsfläche (111) des Lichtleiterstabes (101) mit einer vertikalen Strukturierung oder einer Strichpolitur (115) versehen ist.

9. Anzeigetafel (200) nach einem der vorangehenden Ansprüche, wobei das Lichtleitelement (100) in eine Platte (121) integriert ist.

10. Anzeigetafel (200) nach einem der vorangehenden Ansprüche, wobei Achse (129) des Lichtleiterstabes (101) und die Achse (131) der Freiformlinse (105) parallel gegeneinander versetzt sind.

11. Anzeigetafel (200) nach einem der vorangehenden Ansprüche, wobei das Lichtleitelement (100) aus einem transparenten Kunststoff gebildet ist.

12. Anzeigetafel (200) nach einem der vorangehenden Ansprüche, mit einer Platte (121) mit einer matrixförmigen Anordnung von Lichtleitelementen (100), die einen Lichtleiterstab (101) zum Einleiten von Licht einer Lichtquelle (103); und eine Freiformlinse (105) zum Aussenden des Lichts aus dem Lichtleiterstab als divergierendes Strahlenbündel (107) umfassen.

13. Anzeigetafel (200) nach einem der Ansprüche 1 bis 11, wobei das Lichtleitelement (100) in der Anzeigetafel (200) derart angeordnet ist, dass das divergierende Strahlenbündel (107) gegenüber der Achse (131) der Freiformlinse (105) nach unten gelenkt wird.

14. Verfahren zum Aussenden von Licht mittels eines Lichtleitelements in einer Anzeigetafel (200), **gekennzeichnet durch** die Schritte:
- Einleiten (S101) von Licht einer Lichtquelle (103) in einen Lichtleiterstab (101); und
- Aussenden (S102) des Lichts aus dem Lichtleiterstab (101) durch eine Freiformlinse (105) als divergierendes Strahlenbündel (107).

## Claims

1. A display board (200) comprising:
a light guide element (100) for display boards, having:
- a light guide rod (101) for introducing light from a light source (103); and
- a lens for emitting the light from the light guide rod (101),
**characterized in that** the lens is a free-form lens (105) emitting the light from the light guide rod as a diverging bundle of rays (107).

2. The display board (200) according to claim 1, wherein the cross-section and/or the cross-sectional area of the light guide rod (101) changes continuously over the length of the light guide rod (101).

3. The display board (200) according to one of the preceding claims, wherein the light guide rod (101) and the free-form lens (105) are configured in one piece.

4. The display board (200) according to one of the preceding claims, wherein the light guide rod (101) has a length which is at least a multiple of the length or width of the light entry surface (111).

5. The display board (200) according to one of the preceding claims, wherein the shape of the free-form lens (105) deviates from the shape of an optical converging lens.

6. The display board (200) according to one of the preceding claims, wherein the shape of the free-form lens (105) is configured such that it generates a collimated bundle of rays (107) in a first angular range and a divergent bundle of rays in a second angular range.

7. The display board (200) according to one of the preceding claims, wherein the light guide rod (101) has a circumferentially edge-free side surface (113).

8. The display board (200) according to one of the preceding claims, wherein a light entry surface (111) of the light guide rod (101) is provided with a vertical structuring or a line polish (115).

9. The display board (200) according to one of the preceding claims, wherein the light guide element (100) is integrated in a plate (121).

10. The display board (200) according to one of the preceding claims, wherein the axis (129) of the light guide rod (101) and the axis (131) of the free-form lens (105) are offset parallel to each other.

11. The display board (200) according to one of the preceding claims, wherein the light guide element (100) is formed from transparent plastic.

12. The display board (200) according to one of the preceding claims, comprising a plate (121) with a matrix-shaped arrangement of light guide elements (100) comprising a light guide rod (101) for introducing light from a light source (103); and a free-form lens (105) for emitting the light from the light guide rod as a diverging bundle of rays (107).

13. The display board (200) according to one of claims 1 to 11, wherein the light guide element (100) is arranged in such a way in the display board (200) that the diverging bundle of rays (107) is directed downwards relative to the axis (131) of the free-form lens (105).

14. A method of emitting light by means of a light guide element in a display board (200), **characterized by** the steps of:
- introducing (S101) light from a light source (103) into a light guide rod (101); and
- emitting (S102) the light from the light guide rod (101) through a free-form lens (105) as a diverging bundle of rays (107).

## Revendications

1. Panneau d'affichage (200) comprenant :
un élément de guidage de lumière (100) pour panneaux d'affichage, présentant :
- un barreau guide de lumière (101) destiné à introduire la lumière d'une source lumineuse (103) ; et
- une lentille destinée à émettre la lumière provenant du barreau guide de lumière (101),
**caractérisé en ce que**
la lentille est une lentille de forme libre (105) qui émet la lumière provenant du barreau guide de lumière sous la forme d'un faisceau de rayons divergent (107).

2. Panneau d'affichage (200) selon la revendication 1, dans lequel la section transversale et/ou l'aire de section transversale du barreau guide de lumière (101) varie de manière continue sur la longueur du barreau guide de lumière (101).

3. Panneau d'affichage (200) selon l'une quelconque des revendications précédentes, dans lequel le barreau guide de lumière (101) et la lentille de forme libre (105) sont réalisés d'une seule pièce.

4. Panneau d'affichage (200) selon l'une quelconque des revendications précédentes, dans lequel le barreau guide de lumière (101) présente une longueur qui est au moins un multiple de la longueur ou de la largeur de la surface d'entrée de lumière (111).

5. Panneau d'affichage (200) selon l'une quelconque des revendications précédentes, dans lequel la forme de la lentille de forme libre (105) diffère de la forme d'une lentille optique convergente.

6. Panneau d'affichage (200) selon l'une quelconque des revendications précédentes, dans lequel la forme de la lentille de forme libre (105) est conçue de telle sorte que celle-ci génère, dans une première plage angulaire, un faisceau de rayons collimaté et, dans une deuxième plage angulaire, le faisceau de rayons divergent (107).

7. Panneau d'affichage (200) selon l'une quelconque des revendications précédentes, dans lequel le barreau guide de lumière (101) présente une surface latérale (113) exempte d'arêtes sur sa périphérie.

8. Panneau d'affichage (200) selon l'une quelconque des revendications précédentes, dans lequel une surface d'entrée de lumière (111) du barreau guide de lumière (101) est pourvue d'une structuration verticale ou d'un polissage à stries (115).

9. Panneau d'affichage (200) selon l'une quelconque des revendications précédentes, dans lequel l'élément de guidage de lumière (100) est intégré dans une plaque (121).

10. Panneau d'affichage (200) selon l'une quelconque des revendications précédentes, dans lequel l'axe (129) du barreau guide de lumière (101) et l'axe (131) de la lentille de forme libre (105) sont décalés parallèlement l'un par rapport à l'autre.

11. Panneau d'affichage (200) selon l'une quelconque des revendications précédentes, dans lequel l'élément de guidage de lumière (100) est réalisé en une matière plastique transparente.

12. Panneau d'affichage (200) selon l'une quelconque des revendications précédentes, comprenant une plaque (121) présentant un agencement matriciel d'éléments de guidage de lumière (100), lesquels comprennent un barreau guide de lumière (101) destiné à introduire la lumière d'une source lumineuse (103) ; et une lentille de forme libre (105) destinée à émettre la lumière provenant du barreau guide de lumière sous la forme d'un faisceau de rayons divergent (107).

13. Panneau d'affichage (200) selon l'une quelconque des revendications 1 à 11, dans lequel l'élément de guidage de lumière (100) est agencé dans le panneau d'affichage (200) de telle sorte que le faisceau de rayons divergent (107) est dévié vers le bas par rapport à l'axe (131) de la lentille de forme libre (105).

14. Procédé d'émission de lumière au moyen d'un élément de guidage de lumière dans un panneau d'affichage (200), **caractérisé par** les étapes consistant à :
- introduire (S101) la lumière d'une source lumineuse (103) dans un barreau guide de lumière (101) ; et
- émettre (S102) la lumière provenant du barreau guide de lumière (101) à travers une lentille de forme libre (105) sous la forme d'un faisceau de rayons divergent (107).
